# EUROPEAN PATENT APPLICATION

(11) **EP 4 815 581 A1**
(43) Date of publication of application: **30.09.2026**
(21) Application number: 24894716.0
(22) Date of filing: 25.11.2024
(51) Int. Cl.: H04W 56/00, H04W 4/40

(54) **METHOD FOR PERFORMING COMMUNICATION IN WIRELESS COMMUNICATION SYSTEM AND DEVICE THEREFOR**

(30) Priority: 24.11.2023 KR 20230165910
(71) Applicant: LG Electronics Inc., Yeongdeungpo-gu Seoul 07336 (KR)
(72) Inventor: PARK, Jonghwan, Seoul 06772 (KR); SONG, Min, Seoul 06772 (KR); KIM, Hakseong, Seoul 06772 (KR); SEO, Hanbyul, Seoul 06772 (KR)
(74) Representative: Jung, Minkyu
(86) International application number: PCT/KR2024/018774
(87) International publication number: WO 2025/110826

(57) **Abstract**

Disclosed are a method for configuring a reference time by a first device in a wireless communication system and a device therefor according to various embodiments. Disclosed are a method and a device therefor, the method comprising the steps of: configuring a first reference time on the basis of a network time protocol (NTP); receiving a first message from a second device; adjusting the first reference time based on the NTP to a second reference time based on a global positioning system (GPS) time on the basis that information on the GPS time is included in the first message; and transmitting a second message on the basis of the second reference time.

## Description

### TECHNICAL FIELD

The present disclosure relates to a method of transmitting a message based on a set reference time in a wireless communication system and an apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

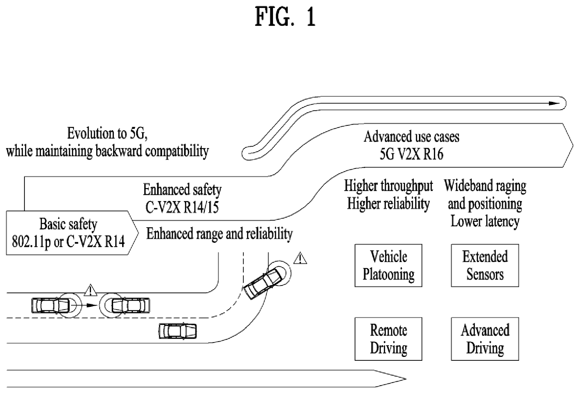

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### Technical Problem

An objective of the present disclosure is to provide a method of transmitting and receiving data and messages more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### Technical Solution

According to an aspect, a method of setting a reference time by a first device in a wireless communication system may include setting a first reference time based on a network time protocol (NTP), receiving a first message from a second device, by a first device, based on the first message including information about a global positioning system (GPS) time, adjusting the first reference time based on the NTP to a second reference time based on the GPS time, by the first device, and transmitting a second message based on the second reference time, by the first device.

The second reference time may be determined by applying a specific offset to the GPS time.

The specific offset may be determined based on a round trip time (RTT) between the first device and the second device or obtainment delay of a user datagram protocol (UDP) datagram.

The first message may further include offset information related to the GPS time and information about an obtainment time interval of the GPS time.

The method may further include transmitting a message, to a network, including a Bootstrap uniform resource identifier (URI) and a location of the first device, and obtaining, from the network, information about a URI for accessing the second device adjacent to a location of the first device.

The first message may be received based on the URI.

The second message may be transmitted to peripheral devices via a server.

The second device may be an infrastructure or an intelligent transportation system (ITS) for providing a vehicle-to-everything (V2X) service.

According to another aspect, provided may be a computer-readable recording medium having recorded thereon a program for performing the method of setting a reference time by a first device in a wireless communication system.

According to another aspect, provided may be a first device for performing the method of setting a reference time by a first device in a wireless communication system.

According to another aspect, provided may be a processing device for controlling the first device for performing the method of setting a reference time by a first device in a wireless communication system.

According to another aspect, a method of providing information about a reference time in a wireless communication system may include receiving a global positioning system (GPS) signal including information about a GPS time, transmitting, to a first device, a first message containing the information about the GPS time, and receiving a second message from the first device, wherein, based on the first message being transmitted to the first device, the second message is received based on a second reference time based on the GPS rather than a first reference time based on a network time protocol (NTP).

According to another aspect, provided may be a non-transient computer-readable storage medium that records instructions for performing the method of providing information about the reference time described above.

According to another aspect, provided may be a second device for performing the method of providing information about the reference time described above.

According to another aspect, provided may be a processing device for performing the method of providing information about the reference time described above.

### Advantageous Effects

According to various embodiments, data and messages may be transmitted and received more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating a method of performing V2X communication between a plurality of platforms.
FIGS. 17 and 18 are diagrams for explaining a method of receiving reference time information based on the GPS time of a reference time entity.
FIG. 19 is a diagram illustrating a method of setting a reference time by a first device.
FIG. 20 is a diagram illustrating a method of providing reference time information by a second device.
FIG. 21 illustrates a communication system applied to the present disclosure.
FIG. 22 illustrates wireless devices applicable to the present disclosure.
FIG. 23 illustrates another example of a wireless device to which the present disclosure is applied.
FIG. 24 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

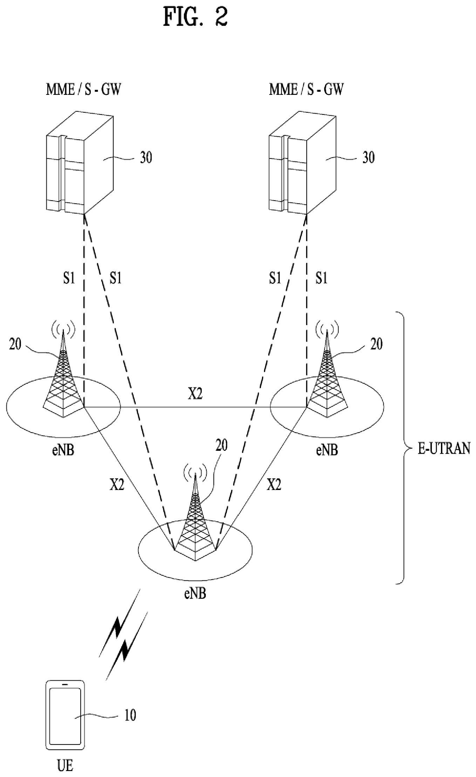

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

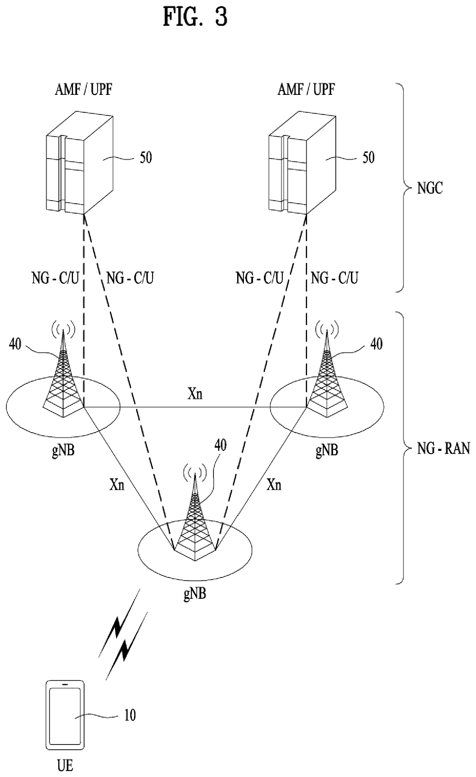

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

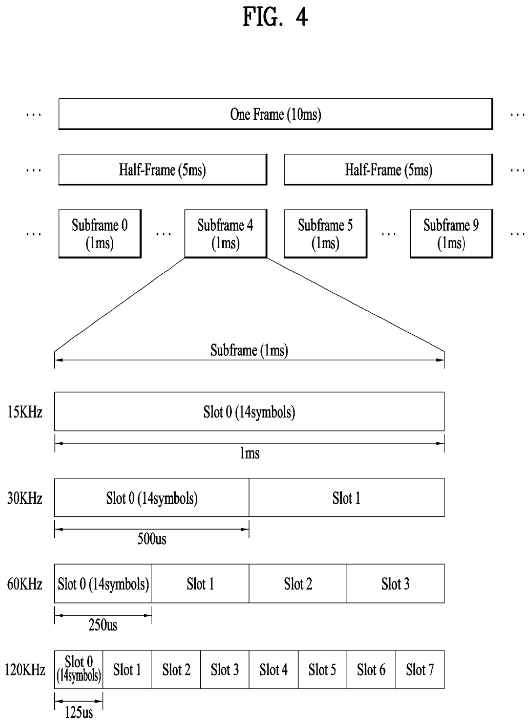

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{s!ot}_{symb}, the number of slots per frame N^{frame,u}ₛₗₒₜ, and the number of slots per subframe N^{subframe,u}_{s!ot} according to an SCS configuration µ in the NCP case.

**[Table 1]**

| SCS (15*2u) | N^{s!ot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

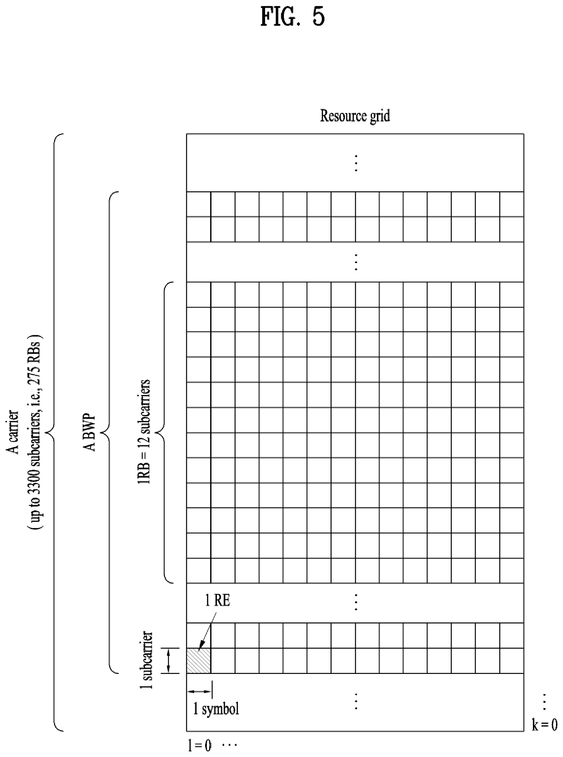

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

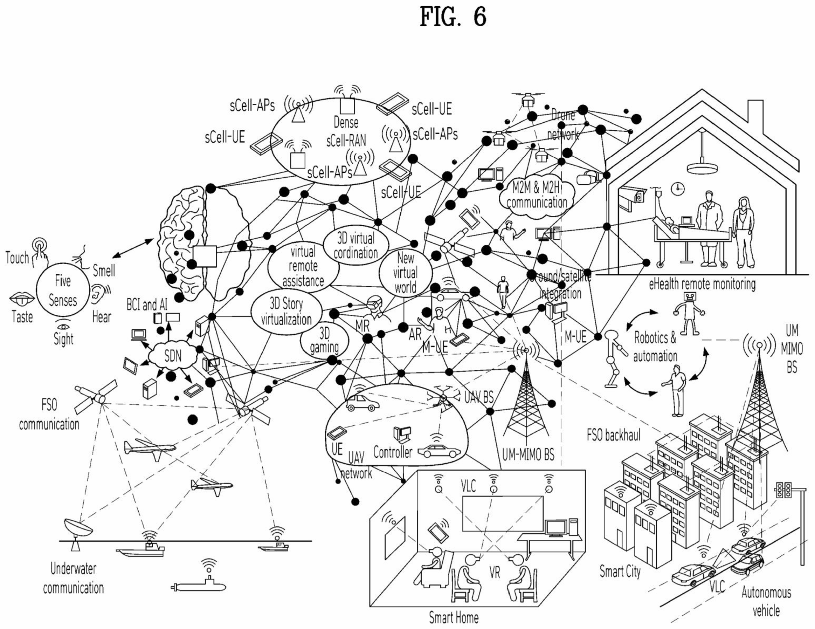

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

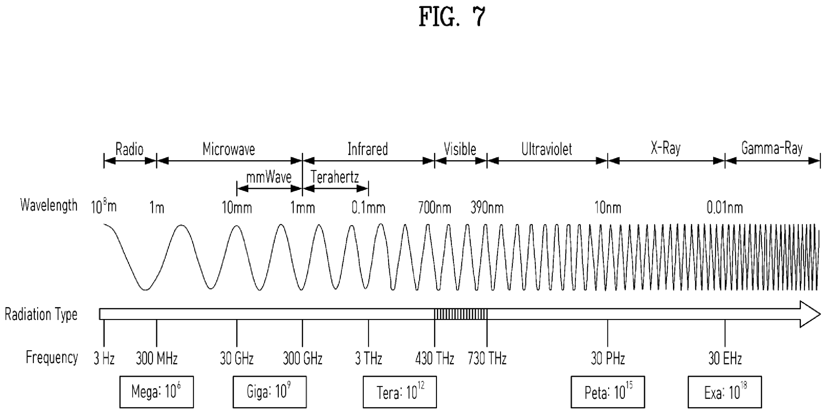

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

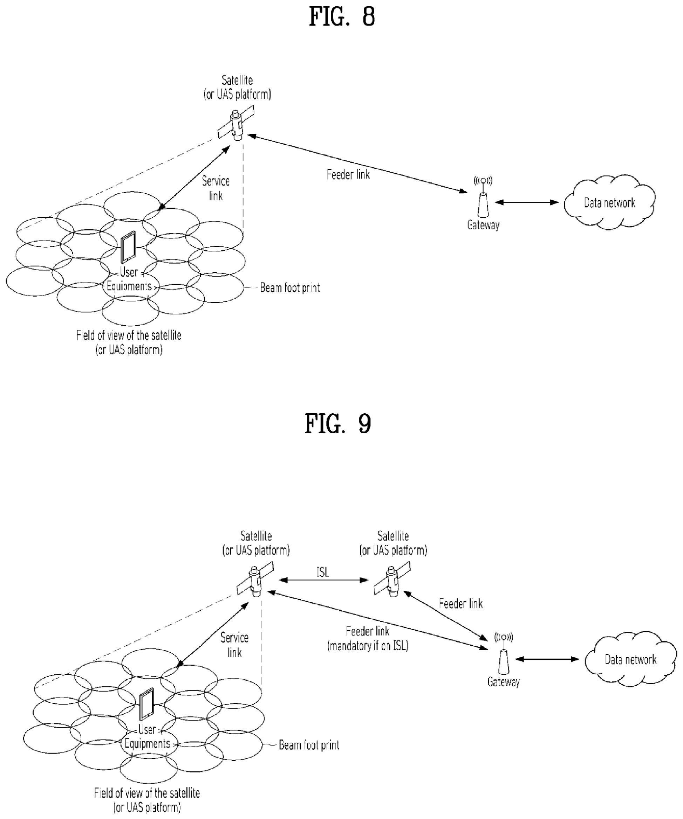

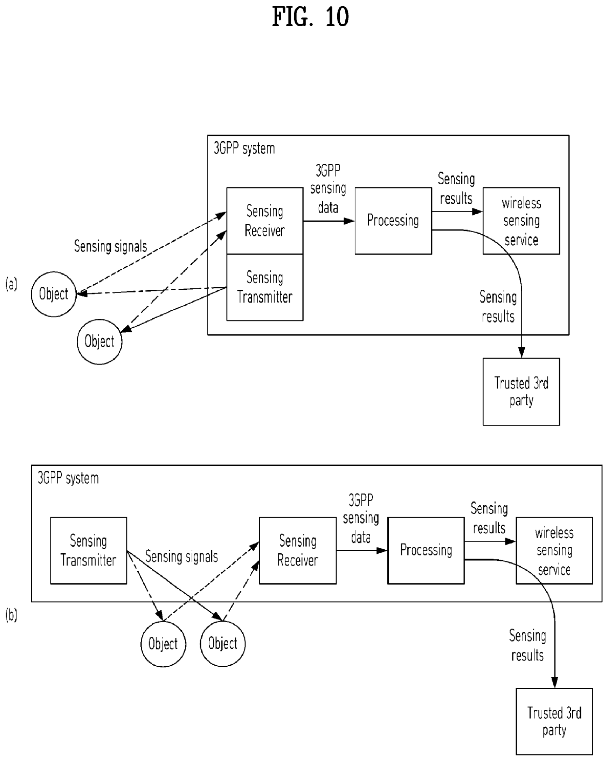

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

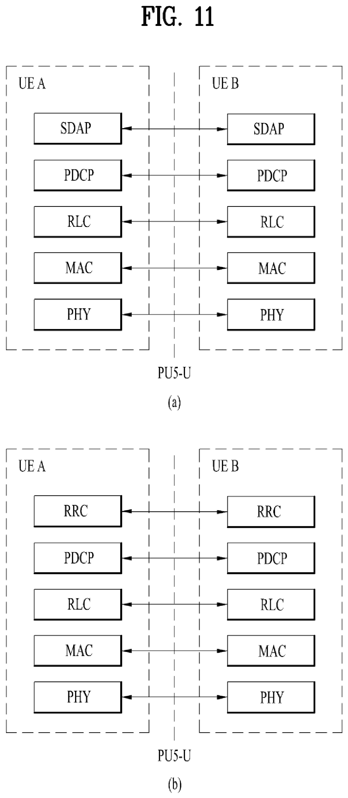

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be preconfigured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

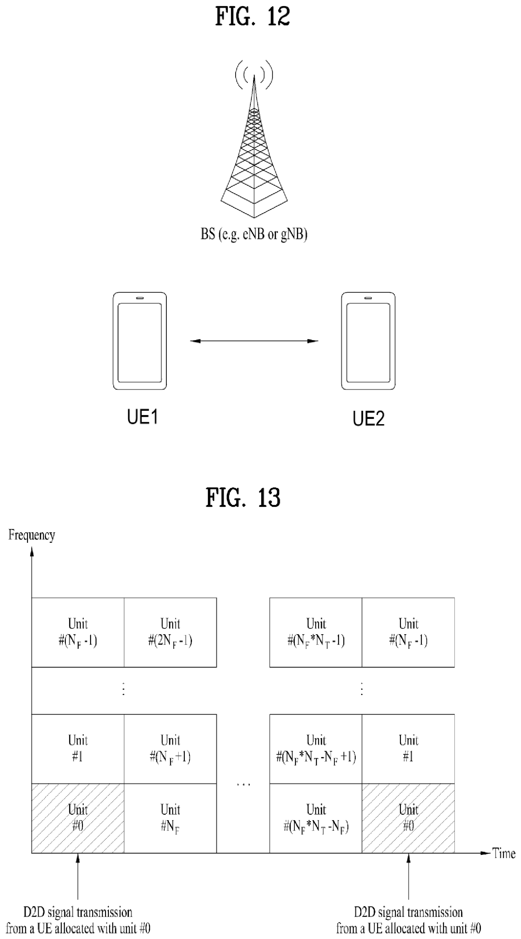

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

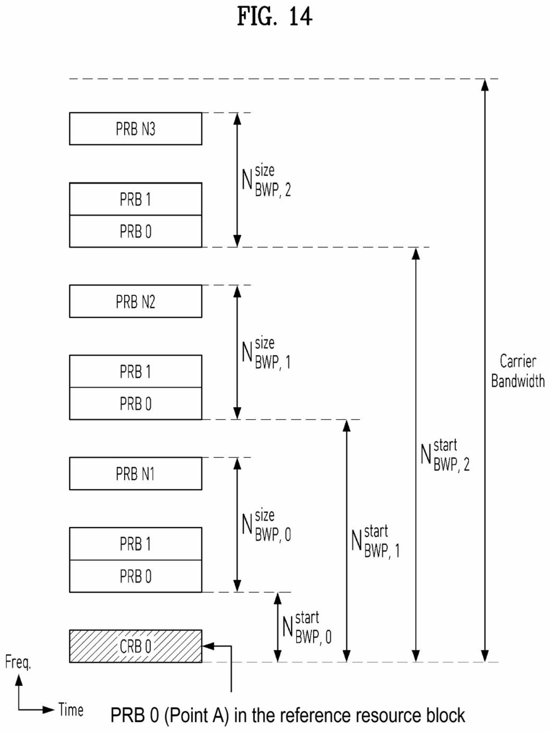

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start} _{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

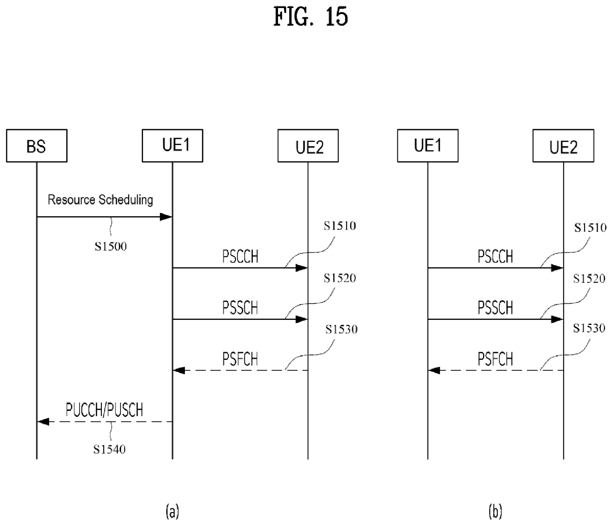

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

A Soft V2X system may be a system in which a Soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the Soft V2X server through the UU interface, and may include mobility information about the VRU, such as a position, a movement direction, a movement path, and a speed of the VRU. That is, the Soft V2X system may use a method of receiving mobility information of VRUs and/or vehicles related to V2X communication through the UU interface and controlling a driving route or a VRU movement flow of the VRU, etc. based on the mobility information received by the Soft V2X server, such as a network. The Soft V2X system may be configured in relation to V2N communication.

Hereinafter, a method for providing a V2X service through a network will be described in detail based on the above-described contents.

### Inter-network interface structure based on messaging protocol for V2N service

A V2X service plays a significant role in ensuring safety, including collision prevention, and in controlling efficient traffic flow by allowing road users (vehicles, road side units (RSUs), pedestrians, etc.) to transmit state information (position, speed, size, etc.) or environmental information (map information, signal information, etc.) to nearby road users through communication. Currently, various V2X services using multiple communication schemes (short range communication, long range communication) exist, and service level requirements are defined for organic operation of V2X services in which a plurality of intelligent transportation system (ITS) stations participate.

V2X messages may be generated by a vehicle and infrastructure and may carry information related to a surrounding environment, road conditions, situations, and events. V2X messages may be utilized for various purposes, including interaction between vehicles, communication between a vehicle and infrastructure, object detection, and warning systems. In other words, such V2X messages may be generated by a vehicle or infrastructure and may include information related to a surrounding environment, situations, and events. In addition, V2X messages may include information collected through sensors of a vehicle, global positioning system (GPS) information, and communication devices, and may be configured in a standardized format. The standardized V2X messages may include various data, such as position, speed, acceleration, lane change information, and traffic signal states. V2X messages may be transmitted in a unidirectional manner or a bidirectional manner, and information included in the V2X messages may be updated and processed in real time. In a V2X environment requiring low-latency communication, rapid transmission of a message is essential, and a latency of several milliseconds or less may be extremely important for rapid situation response such as accident prevention or collision warning. Further, since communication based on a V2X message relies on real-time interaction between a vehicle and infrastructure, message transfer speed and reliability may play an important role in providing a warning to a driver and enabling a vehicle to respond appropriately to a situation. Accordingly, in V2X message communication, it is required to minimize message transfer time and latency, and a design is required to enable an appropriate buffering model and a transmission method for rapid data exchange based on network technologies and protocols suitable for real-time communication.

V2N communication (i.e., the SoftV2X described above) among V2X connections plays a key role in modern distributed systems. Messaging protocols for such communication play an important role in facilitating and enhancing this communication. Among message protocols, the message queuing telemetry transport (MQTT) protocol may include a client, a server, and a broker as core components. This message protocol is a method of connecting a plurality of clients by using a relay-role broker based on an IP protocol. The client may publish messages by using the MQTT protocol and subscribe to a desired topic. The server accepts client connections, manages connections with clients, and may route and relay messages from clients, or the like. The server or network is also commonly referred to as an MQTT broker. The MQTT broker is a central server that relays and coordinates communication between MQTT clients, and delivers messages published by clients to other subscribed clients. Such V2N communication may provide enhanced services that handle various types of information by connecting information transmitted from infrastructures of other operators or countries and regions.

To provide reliable and accurate information for such network-based V2N communication (or long-range V2X communication) and PC5-based V2X communication (or short-range V2X communication), all devices and networks need to share and synchronize the same time. When a reference time is not synchronized, it is difficult to ensure the accurate timestamps of communication messages, which may lead to communication errors, delays, and confusion. The processing or synchronization times for C-V2X (short range) devices and V2N (long range) devices may differ. For example, C-V2X devices (e.g., OBUs) typically set GPS time as the reference time and publish messages based on GPS time. In contrast, V2N devices (or messages published to the server) typically set the reference time based on the reference time of the server, which is a network time protocol (NTP) time. These C-V2X devices and V2N devices (or PC5-based V2X communication and Uu-based V2N communication) require time synchronization to exchange real-time information and maintain a safe driving environment, and reliable V2X communication between the vehicle and the network needs to be ensured through accurate time synchronization. To this end, it may be important to provide accurate time information utilizing a time synchronization server and standardized protocols.

In detail, a synchronization difference between C-V2X (short range) devices and V2N (long range) devices is as follows.

Coordinated universal time (UTC) is the international standard time and may serve as a reference time for consistently displaying time on Earth. UTC is based on atomic clocks, provides second-level accuracy, and is used globally to synchronize time information across different regions and networks.

Network time protocol (NTP) related to V2N communication may synchronize time information based on UTC. NTP-based clients or V2N devices may receive UTC time information from an NTP server and periodically synchronize a time of the local system. However, the NTP retrieves time information via a network (or the Internet), and thus problems may arise due to network latency and the accuracy of the time information. On the other hand, the NTP is synchronized with UTC by taking the leap second into account. Compared to GNSS, relatively accurate synchronization may be provided seamlessly in inter-device synchronization.

GPS, which is involved in C-V2X communication, is a system that provides location and time information based on signals transmitted via satellites. The GPS time is synchronized with atomic clocks on Earth and may provide very accurate time information. However, the GPS time may be affected by reception quality factors such as the exact location of the GPS signal, obstacles, and weather conditions. A method of managing GPS time may also affect accuracy. For example, a GPS obtainment cycle and data processing also have an impact during background updates. GNSS data does not apply leap seconds, andt hus there is a difference from the actual UTC time.

Hereinafter, a method of matching mutual synchronization in interconnection between UEs performing C-V2X communication (or, C-V2X devices or C-V2X UEs) and UEs performing V2N communication (or, V2N devices or V2N UEs) is described in detail.

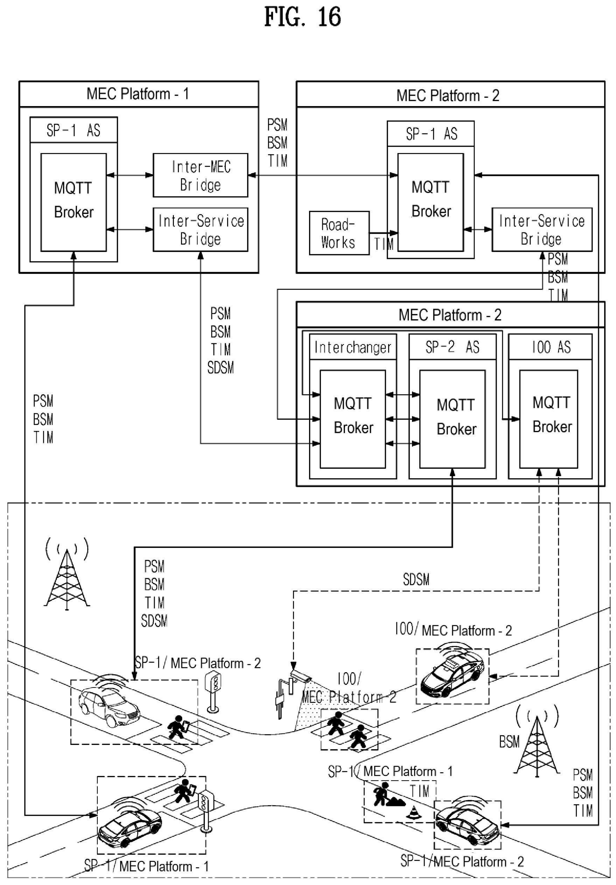

FIG. 16 is a diagram illustrating a method of performing V2X communication between a plurality of platforms.

Due to synchronization mismatches between UEs (or C-V2X UEs) performing GPS-based C-V2X communication and UEs (or V2N UEs) performing NTP-based V2N communication, practical implementation issues related to interconnection occur. For example, when a reference time handled by C-V2X UEs and V2N UEs (e.g., applications, or dedicated UEs) are not the same or when their management methods differ, a time difference in the second may occur therebetween.

In detail, referring to FIG. 16, two different service providers may be connected or interwork with each other. A first provider or a first server (SP-1) may set NTP time as the reference time, and a second provider or a second server (SP-2) may set GPS time as the reference time. In this case, occurrence times of messages exchanged between the first provider SP-1 and the second provider SP-2 may not be synchronized. Due to the issue of synchronization mismatch caused by such a difference in reference time, even if a UE for the first provider SP-1 properly receives the message from a UE for the second provider SP-2, a problem may occur in which the message is not properly reflected in the actual collision assessment. When the first provider SP-1 and the second provider SP-2 are not synchronized with the reference time for the occurrence of an infrastructure operator owner (IOO) message, vehicles connected to the first provider SP-1 or the second provider SP-2 may not accurately perceive that a police car approaches. A traveler information message (TIM) for road workers connected to the first provider SP-1 is generated based on the NTP time of the first provider SP-1, and thus the reference time of the TIM message may not match the reference time of the second provider SP-2. Due to a difference in reference time between providers, not all time critical events may be properly detected.

Therefore, it is necessary to resolve mutual synchronization mismatch between such C-V2X UEs and V2N UEs, and Methods 1 and 2 below may be considered as methods to resolve the synchronization mismatch.

Method 1 may be a method of additionally establishing a reference time entity (or reference time server) for the infrastructure for V2X communication (or, intelligent transportation system (ITS) system). The reference time entity includes a precise GPS time obtainment device capable of using both a network channel (e.g., a channel for V2N communication) and a C-V2X channel based on GPS time, and may transmit reference time information regarding a reference time determined or set based on the GPS time to devices connected to the infrastructure. Here, the reference time information includes information regarding a reference time (ITS reference time, or ITS unified time) determined/set by a reference time entity based on GPS time, and the ITS reference time may be a reference time for synchronization of all devices receiving V2X services in relation to an ITS system or infrastructure. For example, devices receiving services through the ITS system or infrastructure may obtain the reference time information from the reference time entity in a push or pull form. Alternatively, the reference time information may be set for each preset unit zone. In this case, the reference time entity or ITS system (or infrastructure) may provide reference time information for a zone corresponding to a location in which the devices are located. A C-V2X UE within a connection range of the infrastructure may receive reference time information of the reference time entity (i.e., ITS reference time commonly applied to ITS systems determined/set based on GPS time or GNSS time) through a broadcast message based on the PC5 interface. The V2N UE may provide or obtain reference time information of the reference time entity by executing a representational state transfer API (REST API) through a network. Through this, C-V2X UEs and V2N UEs may provide or receive services for ITS after synchronization based on the reference time information of the reference time entity.

Method 2 is a method of sharing reference time information (or GPS time) between an application of a V2N UE and a dedicated UE of a vulnerable road user (VRU) (e.g., wearable devices connected via Bluetooth, or the like). For example, an application of a V2N UE may provide reference time information obtained from a reference time entity to a dedicated UE of a VRU. In this case, the dedicated UE of the VRU may set the reference time by adding an offset (@TimeOffset) that takes into account the transmission control protocol (TCP) round trip time (RTT) or user datagram protocol (UDP) datagram obtainment delay to a time included in the reference time information. For example, the dedicated UE of the VRU may calculate/set a reference time by adding an offset (@TimeOffset) to the received GPS time, taking into account the TCP RTT or the obtainment delay of UDP datagrams. In this case, the dedicated UE may also perform collision assessment with the C-V2X UE more precisely and accurately. In other words, the dedicated UE of the VRU may also match the synchronization time or reference time with the C-V2X UE significantly accurately by correcting the reference time information shared from the application of the V2N UE, taking into account the RTT or datagram obtainment delay, and through such synchronization, there is a technical effect of being able to perform collision assessment with the C-V2X UE more accurately and precisely.

Hereinafter, a method of obtaining a reference time from a reference time entity based on Method 1 and/or Method 2 is described in detail.

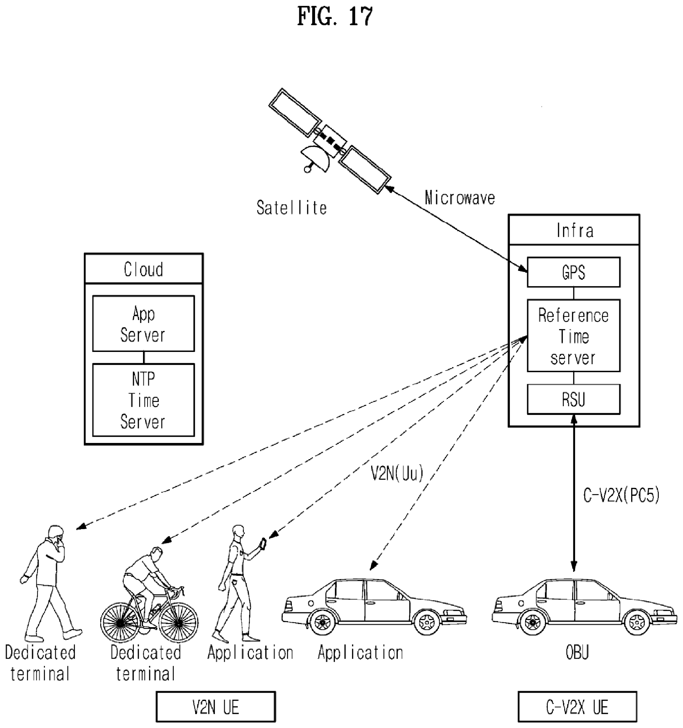

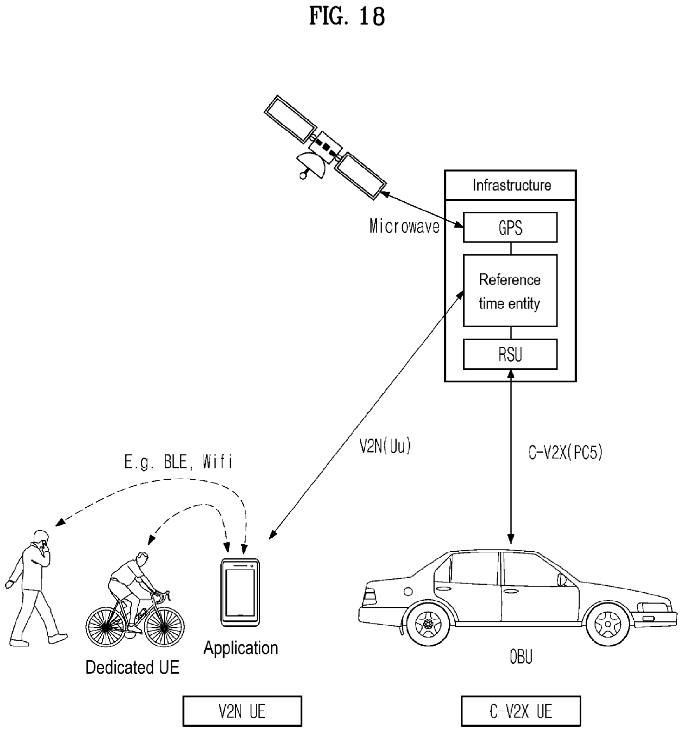

FIGS. 17 and 18 are diagrams for explaining a method of receiving reference time information based on the GPS time of a reference time entity.

Referring to FIG. 17, the infrastructure providing V2X services may include a GPS receiver, a reference time entity, and a road side unit (RSU). The infrastructure may be connected to V2N UEs (e.g., UEs based on a Uu interface) through a reference time entity and to C-V2X UEs (e.g., UEs connected based on the PC5 interface) through an RSU.

The data flow and logical sequence between the infrastructure and UEs (i.e., C-V2X UEs and V2N UEs) may be as follows.
- ① The GPS receiver of the infrastructure may receive GNSS data (or GPS) from global navigation satellite system (GNSS) satellites and convert the GNSS time included in the GNSS data into UTC time and transmit the result to the reference time entity. Alternatively, the GPS receiver may transmit the GPS/GNSS time information itself, received from GNSS satellites, to the reference time entity.
- ② All C-V2X UEs may obtain GPS time through a GPS receiver. If necessary, packet per second (PPS) synchronization with the infrastructure may also be performed.
- ③ When performing bootstrap, all V2N UEs may access the service discovery (announcement) channel of the infrastructure. When V2N UEs connect to the service discovery channel, the V2N UEs may receive information about an endpoint or uniform resource identifier (URI) of a RestfulAPI that may receive a reference time. Here, the service discovery channel may utilize the service announcement channel of European telecommunications standards institute (ETSI) or SA (or 3GPP SA) and may provide new location-based bootstrap endpoints.

Here, the endpoint may be a uniform resource locator (URL) address specified for a client to access a specific resource or function of the server. The RestfulAPI is an API that follows a representational state transfer (REST) principle and may provide a standardized method for clients to exchange data with servers. The RestfulAPI is primarily used in a web service and may exchange data based on an HTTP protocol. Execution of Bootstrap may involve performing specific configuration or loading tasks during the network initialization and startup process.
- ④ A V2N UE may access a reference time entity through a URI and/or endpoint associated with the reference time entity of the infrastructure, and may obtain reference time information (e.g., including an ITS reference time commonly applied to an ITS system) from the reference time entity.
- ⑤ V2N UEs may determine/calculate/adjust the reference time (reference time for transmitting and receiving messages related to V2X services) by correcting a time included in the reference time information of the reference time entity (e.g., GPS time obtained by a GPS receiver) based on an offset (@offset) that considers the RTT for data with the infrastructure.

The Syntax in Table 5 below may be a method or structure (reference time data scheme) for processing time-related data obtained through a URL or URI obtained after location-based Bootstrap, or obtained through a service announcement channel.

**[Table 5]**

| Element | | Semantics |
|---|---|---|
| @wallClockTime (note: GPS time = Wall clock time) | Mandatory | UTC obtained via GPS time, reference time, or ITS reference time commonly applied to ITS systems determined based on GPS time |
| @referenceTimeOffset | Optional | Time offset value to be handled by errors or variables that may occur during obtainment of GPS time provided by server or infrastructure |
| @recommendedUpdateInterval | Optional | Interval for obtaining reference time information recommended by reference time server considering inbound traffic |

Detailed embodiments of Method 1 above are as follows.

### (1) Embodiment 1

A V2N UE may access a specific area (e.g., the Seocho-gu area of Seoul). The V2N UE may transmit a Bootstrap URI specified in relation to the specific area and current location information (e.g., - https://www.ITS.co.kr/bootstrap/(latitude/longitude of Seocho-gu, Seoul)) to the (Bootstrap) server (or infrastructure).

The Bootstrap server may provide an accessible URI for the location of a reference time entity established within the nearest surrounding infrastructure as a return value of the server. In other words, the V2N UE may receive, from the Bootstrap server, information that includes its own location information and a return value of a URI that allows access to the reference time entity established within the nearest infrastructure (e.g., https://www.ITS.co.kr/seocho/referenceTime).

The V2N UE may access/connect to the provided URI and obtain reference time information through the UTC scheme. In other words, the V2N UE may access the reference time entity of the nearest infrastructure through a URI transmitted from the Bootstrap server, receive reference time information related to ITS from the reference time entity (e.g., an ITS reference time commonly applied to ITS systems determined based on GPS time), and set/determine/adjust the reference time based on the transmitted reference time information.

For example, a V2N UE may 141113.999 (14 hours 11 minutes 13.999 seconds) from "@wallclock" of reference time information. The V2N UE may obtain 0.3 from the "@referenceTimeOffset" of the reference time information or obtain 0.3 through the calculation of RTT (e.g., ping value). In this case, V2N may set/adjust the reference time to 141114.299 (14 hours 11 minutes 14.299 seconds), which is a value obtained by applying the value of referenceTimeOffset (or RTT) to the @wallclock (e.g., the value of @wallclock + the value of referenceTimeOffset). Alternatively, when "@ recommendedUpdateInterval" of the reference time information is 60, the V2N UE may access the reference time entity once every 60 seconds to update/adjust the reference time.

### (2) Embodiment 2

A V2N UE may access a specific area (e.g., the Seocho-gu area of Seoul). The V2N UE may transmit a Bootstrap URI specified in relation to the specific area and current location information (e.g., - https://www.ITS.co.kr/bootstrap/(latitude/longitude of Seocho-gu, Seoul)) to the (Bootstrap) server (or infrastructure).

The Bootstrap server may provide an accessible URI for the location of a reference time entity established within the nearest surrounding infrastructure as a return value of the server. In other words, the V2N UE may receive, from the Bootstrap server, information that includes its own location information and a return value of a URI that allows access to the reference time entity established within the nearest infrastructure (e.g., https://www.ITS.co.kr/seocho/SA).

The V2N UE may obtain an SA channel identical to the template received as a broadcast from a C-V2X channel, and may obtain a URI (https://www.ITS.co.kr/seocho/referenceTime) that may access a reference time entity based on the SA channel (or a channel capable of performing V2X communication regardless of the network). The V2N UE may access the URI and obtain information about the reference time (i.e., the ITS reference time commonly applied to ITS systems determined based on GPS time) through the UTC scheme.

The ITS infrastructure (RSU, ITS station, or the like) receives GNSS data through ultra-high-performance antennas. The infrastructure receives the GPS time within the GNSS data, and the reference time entity may share the ITS reference time determined/set based on the GPS time with devices and/or RSUs that receive services from the ITS system. Here, the ITS reference time may be used as the unified reference time for all V2X devices. The infrastructure may manage values for the ITS reference time according to a reasonable update cycle and may update the values in the form of a JavaScript object notation (JSON) file. An RSU based on PC5 may be prepared to transmit data regarding the ITS reference time provided by the reference time entity to the C-V2X UE in a push format. The application (or PC5 application) of the C-V2X UE may receive information regarding the reference time in the form of a push from the RSU and perform synchronization with the reference time of all V2X operations.

The V2N application on the V2N UE may transmit the current latitude/longitude values to the initialization server via HTTP POST or GET according to the Bootstrap method in Seocho-gu. The initialization server may return a JSON file containing a connection server for an optimal unit area Geo-casting and the corresponding reference time based on the location of a user. The V2N application receives the reference time information of the corresponding file and receives various services with time values synchronized with all road users in the area.

For example, a V2N UE may move to another area (e.g., Yongsan-gu) while performing synchronization for V2X operations based on reference time information provided through a reference time entity associated with a specific area related to its location (e.g., Seocho-gu, Seoul). In this case, the V2N UE continuously performs queries to the initialization server based on its current location. For example, the V2N UE may perform a query on the initialization server based on https://www.ITS.co.kr/bootstrap/referenceTime/(longitudevalue)_(latidude value). The initialization server may receive the query and may provide JSON containing information about the reference time, or provide a URI of an infrastructure that may obtain the reference time closest to the location of the V2N UE. In this case, when the location or coverage range of the infrastructure is wide, the reference time information may be updated by reflecting an offset for the delay measured through communication with the V2N UE. The delay offset may be calculated by either the server or the V2N UE. The operation of calculating the offset for such delay and applying the offset to the reference time occurs continuously at regular intervals, and the optimal reference time suitable for the current communication state may be obtained. As such, the V2N UE may synchronize by obtaining reference time information from a corresponding reference time entity or network according to relocation. All V2X devices within a specific relocated area (e.g., Yongsan-gu, Seoul) may be synchronized based on reference time information provided by a corresponding reference time entity, and may perform operations for V2X services based on the reference time information.

Hereinafter, referring to FIG. 18, a VRU having a separate dedicated UE for V2N communication or V2N UE of a user may obtain a reference time through an application.

In relation to Method 2 above, when the application obtains a GPS-based reference time, the V2N UE may synchronize the reference time with the dedicated UE (or the dedicated UE of the VRU). In this case, a potential problem is that the dedicated UE receives the reference time obtained through the application of the V2N UE via Bluetooth or Wi-Fi, and thus a variable of delay related to the reference time may occur. Therefore, the V2N UE needs to further provide @timeOffset, which may correct the delay, to the dedicated UE. For example, the V2N UE may provide information as defined in Table 6 below to the dedicated UE.

**[Table 6]**

| Element | | Semantics |
|---|---|---|
| @wallClockTime | Mandatory | UTC and reference time obtained by application of UE via GPS time |
| @referenceTimeOffset | Optional | Time offset value to be processed due to errors or variables that may occur during GPS time obtainment provided by UE |
| @recommendedUpdateInterval | Optional | Recommended interval for obtainment when UE functions as reference time server |

Then, an embodiment related to Method 2 may be as follows.

A V2N UE (or an application of the V2N UE) may obtain reference time information (Wall clock time, ITS reference time, or GPS time) from a reference time entity through the process of Method 1 described above. The dedicated UE of the VRU connected to the V2N UE may periodically communicate with the application of the V2N UE to obtain and synchronize the reference time information (wallclockTime, ITS reference time). In this case, the dedicated UE of the VRU may synchronize the Wall clock (or GPS time, reference time) by referring to the referenceTimeOffset value provided by the V2N UE or based on a directly measured timeOffset value. Through such matching of reference times, the dedicated UE of the VRU may also perform V2X-related operations based on a reference time (or Wall clock) with almost no error compared to the reference time (or Wall clock) of the C-V2X UE, thereby enabling collision assessment with the C-V2X UE to be performed with considerable accuracy.

For example, the dedicated UE of the VRU may 141113.999 (14 hours 11 minutes 13.999 seconds) from "@wallclock" of reference time information of the V2N UE. The dedicated UE of the VRU may obtain 0.3 from the "@referenceTimeOffset" of the reference time information or obtain 0.3 through the calculation of RTT (e.g., ping value) with the V2N UE. In this case, the dedicated UE of the VRU may set/adjust the reference time to 141114.299 (14 hours 11 minutes 14.299 seconds), which is a value obtained by applying the value of referenceTimeOffset (or RTT) to the @wallclock (e.g., the value of @wallclock + the value of referenceTimeOffset). Alternatively, when "@ recommendedUpdateInterval" of the reference time information is 60, the dedicated UE of the VRU may connect to the application of the V2N UE once every 60 seconds to update/adjust its reference time.

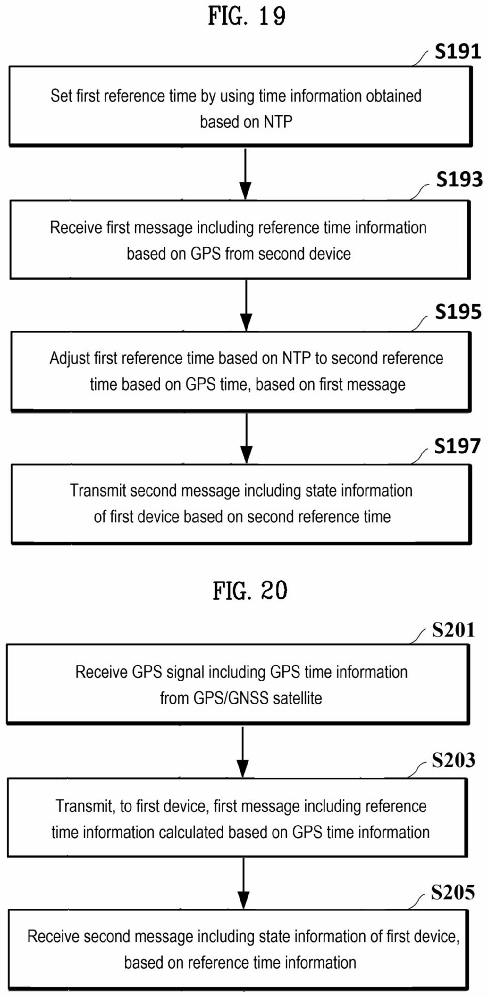

FIG. 19 is a diagram illustrating a method of setting a reference time by a first device.

The first device may be a device that performs V2N communication through a network based on the Uu interface described with reference to FIGS. 16 to 18. The first device may be wirelessly connected to a network through an application, or the like.

In detail, referring to FIG. 19, the first device may set a first reference time based on a network time protocol (NTP) (S191). For example, the first device may obtain time information set in relation to NTP from an NTP server via the Internet, and may set the first reference time based on the time information. Here, the first reference time is a network time, and as described above, due to the communication environment, or the like, there may be a certain level of error compared to the GPS-based reference time.

Then, the first device may receive the first message from the second device (S193). In detail, the first device may transmit a message to a network including a Bootstrap uniform resource identifier (URI) and the location of the first device to receive V2X-related services. In this case, information regarding a URI for accessing the second device adjacent to the location of the first device may be obtained from the network. Here, the second device may be an infrastructure providing V2X services as described above, or an ITS system (or an ITS station). In this case, the first device may access or be connected to the second device based on a URI for the second device provided from the network, and may receive the first message from the second device.

In this case, the first message may include information regarding the ITS reference time determined based on the GPS time obtained by the second device. In this case, the first device may adjust the first reference time based on NTP to the second reference time based on GPS time (i.e., the GPS-based reference time set to be commonly applied in the ITS system), based on the ITS reference time included in the first message (S195). That is, the first device may adjust/change the existing NTP-based first reference time to a GPS-based second reference time in response to reception of the first message. Alternatively, the first message may further include offset information that needs to be applied in relation to the setting/determination of the second reference time as defined in Table 5, and/or information regarding the reception interval of the first message for setting the second reference time. Alternatively, the first device may calculate the offset to be applied to the GPS time directly without receiving offset information through the first message. For example, the first device may calculate the round trip time (RTT) or the delay in obtaining a user datagram protocol (UDP) datagram) with the second device through the exchange of data/messages with the second device. In this case, the first device determines an offset based on the RTT and/or the obtainment delay, determines the second reference time by applying the offset to the GPS time, and may adjust/change the first reference time to the second reference time.

Then, the first device may transmit a second message based on the adjusted second reference time (S197). The second message may include state information of the first device (information for recognizing the first device, such as mobility information, or identification information) and may be transmitted to peripheral devices through the second device (or network). In detail, the first device may transmit the second message including a time stamp set based on the second reference time. In this case, the first device may perform transmission of the second message by using a reference time based on GPS time, just like C-V2X UEs/devices that perform V2X communication based on a PC5 interface.

FIG. 20 is a diagram illustrating a method of providing reference time information by a second device.

The second device may be a network/infrastructure/ITS system/reference time entity that provides V2X services over a network as described above. The second device may provide reference time information to V2N devices to synchronize with a common reference time with C-V2X devices receiving V2X services through a PC5 interface. As described above, V2N devices may transmit and receive messages by using an NTP reference time (hereinafter, the first reference time) set based on time information obtained through the Internet.

In detail, the second device may receive a GPS signal containing GPS time information from a GPS/GNSS satellite (S201). As described above, the second device may include a GPS receiver capable of obtaining a GPS signal with considerable accuracy, and may receive a GPS signal through the GPS receiver. The second device may obtain GPS time information based on the received GPS signal.

Then, the second device may transmit the first message to the first device that includes reference time information calculated based on the GPS time information (S203). As described above, the first message may include reference time information, offset information (or, RTT for the V2N device, or offset calculated based on the obtainment delay of the UDP datagram), and/or information regarding the obtainment time interval of GPS time information (or reference time information) based on the first message. The obtainment time interval may be determined based on the number of devices connected to the second devices, the speed of the devices, the density of the devices, or the like.

Then, the second device may receive the second message from the first device that includes the state information of the first device (S205). The second device may forward/transmit the second message to UEs surrounding the first device (or UEs subscribing to a topic set for a region associated with the first device). When the first message is transmitted to the first device, the second device may receive the second message based on the second reference time based on the GPS, rather than the first reference time based on network time protocol (NTP).

As such, the proposed disclosure provides GPS-based time information to V2N devices performing V2X communication through a network, thereby enabling synchronization between V2N devices and V2X devices based on a PC5 interface using a common reference time. The proposed disclosure may effectively improve the accuracy of collision risk detection based on V2X messages and significantly improve the reliability of V2X services by providing services at a common reference time among devices receiving V2X services on an ITS system.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

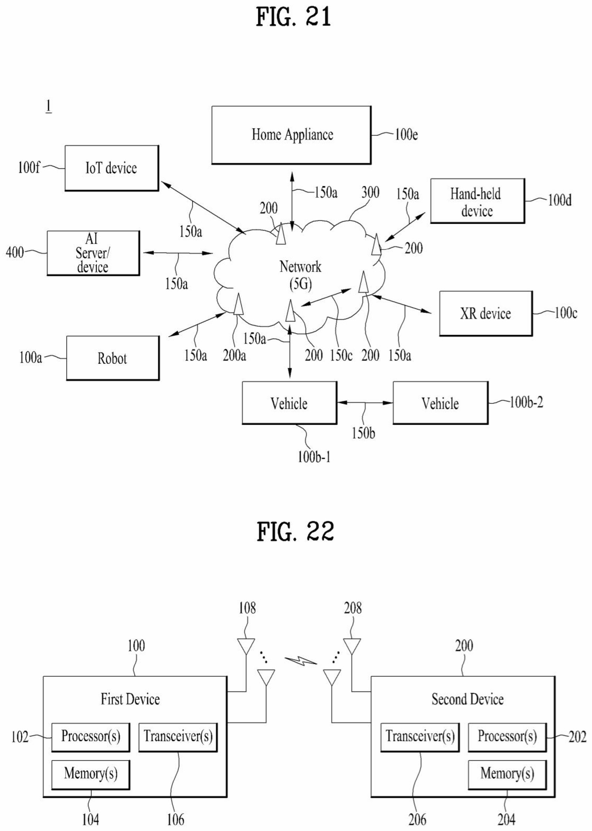

FIG. 21 illustrates a communication system applied to the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 22 illustrates a wireless device applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The first wireless device or first device 100 may include the processor 102, the memory 104, and the transceiver 106. The memory 104 may include at least one program for performing operations related to the embodiments described with reference to FIGS. 16 to 20.

In detail, the processor 102 may set a first reference time based on a network time protocol (NTP), control the transceiver 106 to receive a first message from a second device, adjust the first reference time based on the NTP to a second reference time based on global positioning system (GPS) time based on the fact that the first message includes information about GPS time, and transmit the second message based on the second reference time.

Alternatively, a processing device that controls the first device 100 may be configured. In this case, the processing device may include at least one processor, and at least one memory connected to the at least one processor and storing instructions, and in this case, the instructions, when executed by the at least one processor, cause the first device to set a first reference time based on a network time protocol (NTP), receive a first message from a second device, adjust a first reference time based on the NTP to a second reference time based on global positioning system (GPS) time based on the fact that the first message includes information regarding GPS time, and transmit a second message based on the second reference time.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

The second wireless device or network 200 may include the transceiver 206, the processor 202, and the memory 204. The memory 204 may include at least one program for performing operations related to the embodiments described with reference to FIGS. 16 to 20.

In detail, the processor 202 may control the transceiver 206 to receive a global positioning system (GPS) signal containing information about a GPS time, transmit a first message containing information about the GPS time to a first device, and receive a second message from the first device. Here, based on the fact that the first message is transmitted to the first device, the second message may be received based on a second reference time based on GPS rather than a first reference time based on a network time protocol (NTP).

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

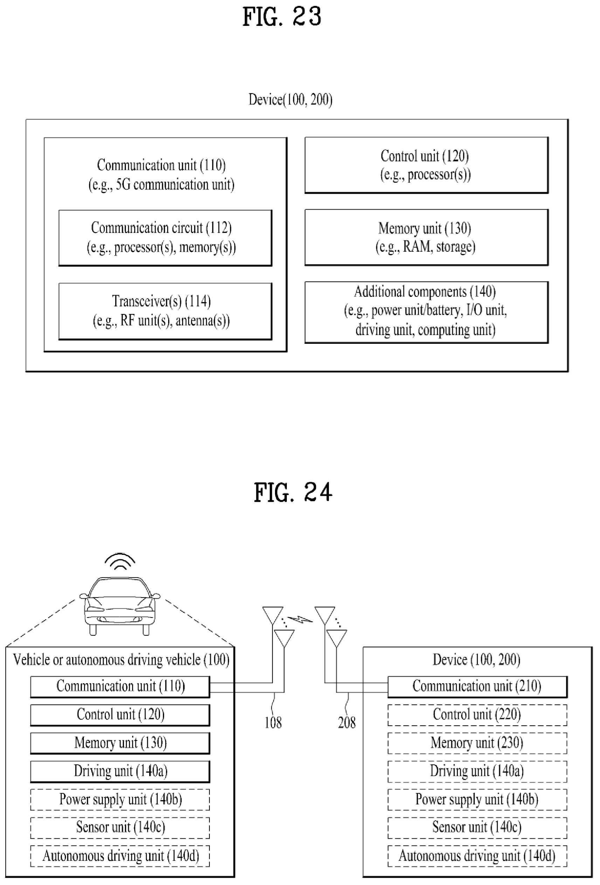

FIG. 23 illustrates another example of a wireless device applied to the present disclosure. The wireless device may be implemented in various forms according to a use-case/service (refer to FIG. 21)

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultra-acoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### Industrial Applicability

The above-described embodiments of the present disclosure are applicable to various mobile communication systems.

## Claims

1. A method comprising:
setting a first reference time based on a network time protocol (NTP);
receiving, by a first device, a first message from a second device;
based on the first message including information about a global positioning system (GPS) time, adjusting, by a first device, the first reference time based on the NTP to a second reference time based on the GPS time; and
transmitting, by the first device, a second message based on the second reference time.

2. The method of claim 1, wherein the second reference time is determined by applying a specific offset to the GPS time.

3. The method of claim 2, wherein the specific offset is determined based on a round trip time (RTT) between the first device and the second device or obtainment delay of a user datagram protocol (UDP) datagram.

4. The method of claim 1, wherein the first message further includes offset information related to the GPS time and information about an obtainment time interval of the GPS time.

5. The method of claim 1, further comprising:
transmitting a message, to a network, including a Bootstrap uniform resource identifier (URI) and a location of the first device; and
obtaining, from the network, information about a URI for accessing the second device adjacent to a location of the first device.

6. The method of claim 5, wherein the first message is received based on the URI.

7. The method of claim 1, wherein the second message is transmitted to peripheral devices via a server.

8. The method of claim 1, wherein the second device is an infrastructure or an intelligent transportation system (ITS) for providing a vehicle-to-everything (V2X) service.

9. A computer-readable recording medium having recorded thereon a program for performing the method of claim 1.

10. A first device comprising:
a radio frequency (RF) transceiver; and
a processor connected to the RF transceiver,
wherein the processor sets a first reference time based on a network time protocol (NTP), and controls the RF transceiver to receive a first message from a second device, adjust the first reference time based on the NTP to a second reference time based on global positioning system (GPS) time based on the first message including information about a GPS time, and transmit the second message based on the second reference time.

11. A processing device comprising:
at least one processor; and
at least one memory connected to the at least one processor and storing instructions, wherein the instructions, when executed by the at least one processor, cause the first device to:
set a first reference time based on a network time protocol (NTP), receive a first message from a second device, adjust the first reference time based on the NTP to a second reference time based on global positioning system (GPS) time based on the first message including information about a GPS time, and transmit the second message based on the second reference time.

12. A method comprising:
receiving a global positioning system (GPS) signal including information about a GPS time;
transmitting, to a first device, a first message containing the information about the GPS time; and
receiving a second message from the first device,
wherein, based on the first message being transmitted to the first device, the second message is received based on a second reference time based on the GPS rather than a first reference time based on a network time protocol (NTP).

13. A computer-readable recording medium having recorded thereon a program for performing the method of claim 12.

14. A second device comprising:
a radio frequency (RF) transceiver; and
a processor connected to the RF transceiver,
wherein the processor controls the RF transceiver to receive a global positioning system (GPS) signal including information about a GPS time, transmit a first message including information about the GPS time to a first device, and receive a second message from the first device.
based on the first message being transmitted to the first device, the second message is received based on a second reference time based on the GPS rather than a first reference time based on a network time protocol (NTP).

15. A processing device comprising:
at least one processor; and
at least one memory connected to the at least one processor and storing instructions, wherein the instructions, when executed by the at least one processor, cause a network to:
receive a global positioning system (GPS) signal including information about a GPS time, transmit a first message including information about the GPS time to a first device, and receive a second message from the first device, and
based on the first message being transmitted to the first device, the second message is received based on a second reference time based on the GPS rather than a first reference time based on a network time protocol (NTP).
